# FASCICULE DE BREVET EUROPEEN

(11) **EP 2 382 900 B1**
(45) Date de publication et mention de la délivrance du brevet: **14.05.2014**
(21) Numéro de dépôt: 11163302.0
(22) Date de dépôt: 20.04.2011
(51) Int. Cl.: A47J 37/06

(54) **Appareil à raclette**
Raclette-Gerät
Device with scraper

(30) Priorité: 29.04.2010 FR 1053344
(43) Date de publication de la demande: 02.11.2011
(73) Titulaire: SEB SA, 69130 Ecully (FR)
(72) Inventeur: Bouvier, Pierre, 38110 Saint Victor de Cessieu (FR); Perrier, Jean-Christophe, 73100 Brison Saint Innocent (FR); Gouthière, Christophe, 74150 Rumilly (FR)
(74) Mandataire: Novagraaf Technologies

(56) Documents cités:
- EP-A1- 1 396 219
- CH-A- 544 537
- DE-U1- 29 618 202

## Description

La présente invention concerne un appareil à raclette, notamment un appareil à raclette dont la forme générale est longiligne.

On connaît un appareil à raclette comprenant une sole adaptée à recevoir des récipients de cuisson, une résistance électrique située de façon à être au-dessus des récipients quand ils reposent sur la sole, une structure d'appui qui s'étend verticalement au-delà de la résistance électrique, et un capot amovible adapté à reposer sur la structure d'appui et à envelopper la résistance électrique de façon à en empêcher l'accès à un utilisateur.

Cependant, un des inconvénients d'un tel appareil est que l'utilisateur est obligé de ranger l'appareil dans son emballage, surtout s'il veut disposer ce dernier sur sa tranche pour des raisons d'encombrement. Faute de quoi le capot amovible se sépare du reste de l'appareil. Ainsi, pour éviter des risques de chutes du capot (et des déformations consécutives) ainsi que des manipulations supplémentaires, l'appareil est inévitablement rangé dans son emballage.

La présente invention vise à réaliser un appareil à raclette qui, quand il est rangé sur sa tranche, sans son emballage, ne présente pas les inconvénients précités.

Selon l'invention, l'appareil à raclette du type précité comprend un dispositif de verrouillage libérable permettant d'immobiliser le capot à la structure d'appui.

Ainsi, une fois le capot verrouillé à la structure d'appui, l'appareil constitue une unité inséparable pouvant être facilement rangée quelle que soit son orientation.

D'autres particularités et avantages de la présente invention apparaitront dans le mode de réalisation donné à titre d'exemple non limitatif et illustré par les dessins mis en annexe dans lesquels :
La figure 1 est une vue de dessus en perspective d'un appareil à raclette conforme à la présente invention,
La figure 2 est une vue similaire à la figure 1, sans le capot,
La figure 3 est une vue d'un côté longitudinal de l'appareil,
La figure 4 est une vue d'un côté transversal de l'appareil, et
La figure 5 est une vue en coupe normale à l'axe longitudinal.

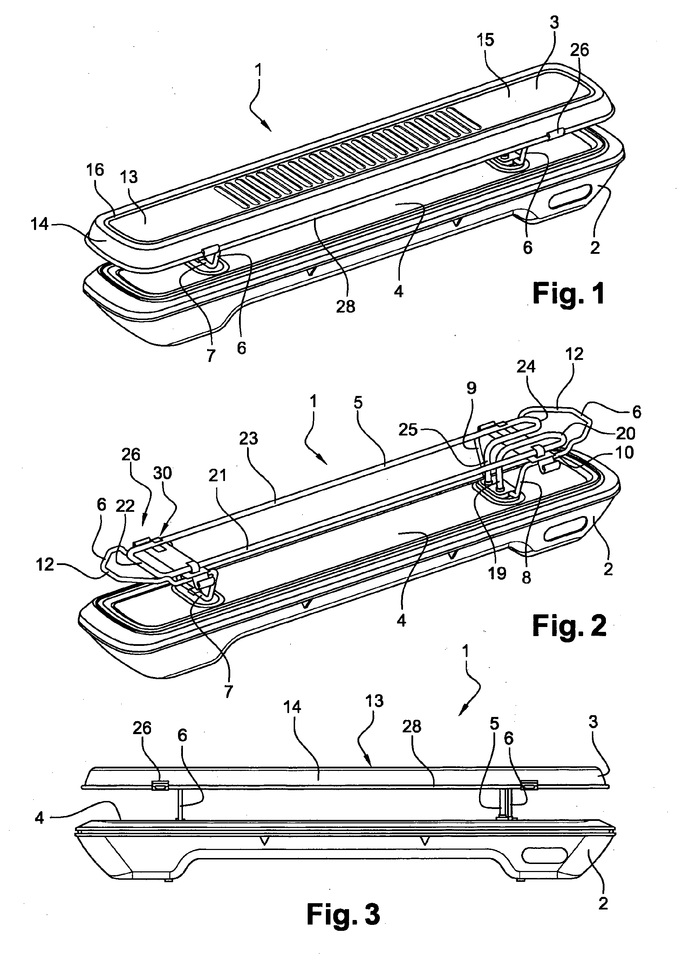

A la figure 1 est représenté un appareil à raclette 1 comprenant un socle 2 adapté à reposer sur une surface de travail et un capot 3 amovible du socle 2. La surface supérieure du socle 2 est formée par une sole 4 qui est adaptée à recevoir des récipients de cuisson.

L'appareil à raclette 1 comprend également une résistance électrique 5 qui fait saillie verticalement du socle 2 et qui est située de façon à être au-dessus des récipients quand ils reposent sur la sole 4.

L'appareil comprend également au moins une structure d'appui 6 (ici, deux) qui fait également saillie verticalement du socle 2. La structure d'appui 6 s'étend verticalement au-delà de la résistance électrique 5. Le capot 3 est adapté à reposer sur la structure d'appui 6 et à envelopper la résistance électrique 5 de façon à en empêcher l'accès à un utilisateur.

De façon plus précise, le présent appareil à raclette 1 est un appareil longiligne conformé de façon à recevoir six récipients de cuisson en ligne. Comme illustré à la figure 3, la sole 4 comprend trois zones : une zone centrale pouvant recevoir quatre récipients, et deux zones latérales pouvant recevoir chacune un récipient. Chaque zone latérale est séparée de la zone centrale par une structure d'appui 6 qui est fixé à la sole 4.

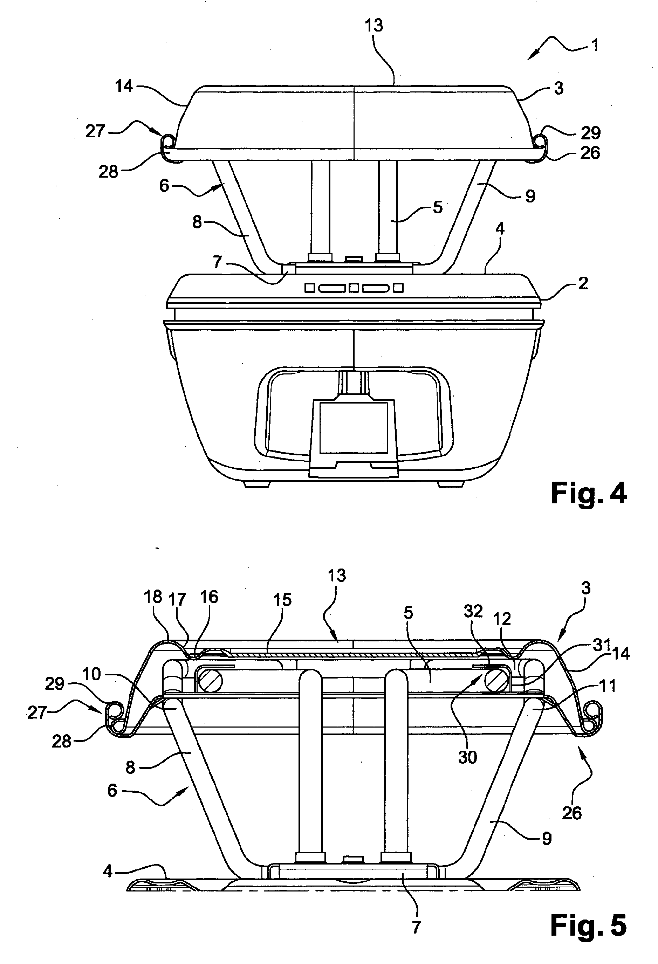

Chaque structure d'appui 6 est une structure tubulaire qui comprend une embase 7 fixée à la sole 4, deux montants verticaux 8, 9 qui s'étendent verticalement depuis l'embase 7, deux bras horizontaux 10, 11 qui s'étendent horizontalement depuis l'extrémité libre du montant vertical 8, 9 correspondant, et une traverse supérieure cintrée 12 horizontale qui relie les extrémités libres des deux bras horizontaux 10, 11, la traverse 12 étant surélevée par rapport aux bras 10, 11 et s'étendant au-dessus de la zone latérale correspondante. Le capot 3 repose directement sur la traverse 12, comme illustré à la figure 5.

Le capot 3 est formé par une paroi horizontale 13 et une paroi latérale 14 sensiblement verticale tombant depuis la paroi horizontale 13 et ceinturant la résistance électrique 5. La paroi horizontale 13 comprend une surface centrale 15 formant la surface de cuisson, une rainure périphérique 16 bordant la surface centrale 15, et une surface inclinée 17 délimitant extérieurement la rainure périphérique 16, l'extrémité libre de la surface inclinée 17 étant situé à un niveau supérieur de celui de la surface centrale 15. La paroi latérale 14 et la surface inclinée 17 se rejoignent au niveau de l'extrémité libre surélevé 18 de la paroi horizontale 13.

La résistance électrique 5 traverse la sole 4 au niveau d'une des deux structures d'appui 6, comme illustré à la figure 3. Cette résistance 5 comprend un premier tronçon vertical 19 qui est prolongé par un premier tronçon resserré en U 20 s'étendant au-dessus de la zone latérale de la sole 4 délimitée par la structure d'appui 6 adjacente au premier tronçon vertical 19 ; ce premier tronçon resserré en U 20 est prolongé par un premier tronçon horizontal 21 s'étendant sensiblement sur toute la longueur du capot 3 le long de la paroi latérale 14, puis par un tronçon ample en U 22 s'étendant le long de la paroi latérale 14 au niveau de la deuxième zone latérale de la sole 4 ; ce tronçon ample en U 22 est prolongé par un second tronçon horizontal 23 symétrique du premier tronçon horizontal 21, puis par un second tronçon resserré en U 24 faisant face au premier tronçon resserré en U 20, et enfin par un second tronçon vertical 25 adjacent au premier tronçon vertical 19.

Par ailleurs, l'appareil à raclette 1 comprend au moins un dispositif de verrouillage libérable 26 permettant d'immobiliser le capot 3 à une structure d'appui 6. Ici, l'appareil 1 comprend deux dispositifs de verrouillage libérable 26, un par structure 6. Ces dispositifs 26 permettent de fixer le capot 3 amovible et donc d'éviter qu'il se sépare du reste de l'appareil 1, notamment quand ce dernier est rangé sur sa tranche. De plus, dans un tel appareil longiligne avec un capot 3 aussi long, ces dispositifs 26 évitent une déformation du capot 3 due à la chaleur émise par la résistance électrique 5 pendant son utilisation.

De manière générale, le dispositif de verrouillage libérable coopère avec la paroi latérale 14 du capot 3 pour immobiliser le capot 3 à la structure d'appui 6. Le dispositif de verrouillage libérable se verrouille et se déverrouille sur la paroi latérale 14 du capot 3, et de préférence au voisinage de son extrémité inférieure. Le capot 3 comprend une bordure 28. De préférence, le dispositif de verrouillage libérable coopère avec la bordure 28 du capot 3 pour immobiliser le capot 3 à la structure d'appui 6.

La paroi latérale 14 peut comprendre au moins une ouverture (non représentée) dans laquelle vient s'insérer une extrémité d'encliquetage 27 des dispositifs de verrouillage libérable 26 pour fixer le capot 3 à la structure d'appui 6. Cette ouverture est positionnée au voisinage de l'extrémité inférieure du capot 3.

Dans le présent exemple représenté sur les figures 1 à 5, chaque dispositif de verrouillage 26 est fixé (ici, soudé) à la structure d'appui 6 correspondante. De façon plus précise, chaque dispositif de verrouillage 26 repose fixement sur les deux bras horizontaux 10, 11 de la structure d'appui 6. Chaque dispositif de verrouillage 26 est formé par une lame élastiquement déformable adaptée à verrouiller le capot 3 par encliquetage, dont la portion centrale repose sur les bras 10, 11. La lame élastiquement déformable permet de fixer le capot 3 sur la structure d'appui 6 et de le détacher de la structure d'appui 6 de manière simple et rapide. Aucun outil n'est nécessaire. L'utilisateur peut verrouiller et déverrouiller la lame élastiquement déformable avec ses doigts. De façon plus précise, chaque lame élastiquement déformable comprend au moins une extrémité d'encliquetage 27 adaptée à venir emprisonner la bordure 28 du capot 3 (en l'occurrence, chaque lame comprend deux extrémités d'encliquetage 27 opposées adaptées à venir emprisonner la bordure 28 du capot 3 en deux zones opposées l'une de l'autre). La bordure 28 du capot 3 est formée par l'extrémité libre inférieure de la paroi latérale 14 et elle présente une configuration saillante horizontalement vers l'extérieur afin de permettre son encliquetage.

L'extrémité libre 29 de chaque extrémité d'encliquetage 27 forme une zone de manipulation permettant à un utilisateur de déformer élastiquement l'extrémité d'encliquetage et de libérer le capot 3.

Ainsi, le verrouillage du capot 3 se fait en le posant convenablement sur les structures d'appui 6, la bordure 28 venant en butée contre chaque extrémité d'encliquetage 27. En imposant une pression sur le capot 3, celui-ci vient en butée contre les structures d'appui 6 et la bordure 28 s'encliquette. Le déverrouillage se fait en écartant légèrement l'extrémité libre 29 de chaque extrémité d'encliquetage 19 de façon à pouvoir libérer la bordure 28.

Par ailleurs, chaque dispositif de verrouillage 26 comprend des moyens de guidage 30 adaptés à limiter les déformations de la résistance électrique 5. Ces moyens de guidage 30 ne sont pas fixés à la résistance 5. Ici, les moyens de guidage 30 sont formés par des pattes 30 enveloppant partiellement la résistance électrique 5. Chaque patte 30 comprend une portion verticale 31 disposée latéralement à l'extérieur du tronçon de résistance correspondant, et une portion horizontale 32 disposée au-dessus de ce même tronçon, ce dernier reposant librement sur la portion centrale du dispositif de verrouillage 26.

Ainsi, d'une part la déformation de la résistance électrique 5 due à sa chauffe est limitée et, d'autre part, la distance séparant le capot 3 de la résistance 5 est maitrisée, malgré la dilatation de ces deux éléments.

En variante, le dispositif de verrouillage libérable peut comprendre des moyens autres qu'une lame à ressort (pièce plastique ou fil métallique, par exemple).

## Revendications

1. Appareil à raclette (1) comprenant une sole (4) adaptée à recevoir des récipients de cuisson, une résistance électrique (5) située de façon à être au-dessus des récipients quand ils reposent sur la sole (4), une structure d'appui (6) qui s'étend verticalement au-delà de la résistance électrique (5), et un capot (3) amovible adapté à reposer sur la structure d'appui (6) et à envelopper la résistance électrique (5) de façon à en empêcher l'accès à un utilisateur, **caractérisé en ce que** l'appareil à raclette (1) comprend un dispositif de verrouillage libérable (26) permettant d'immobiliser le capot (3) à la structure d'appui (6) et qui est formé par une lame élastiquement déformable adaptée à immobiliser ainsi le capot (3) par encliquetage.

2. Appareil à raclette (1) selon la revendication 1, **caractérisé en ce que** le dispositif de verrouillage libérable (26) est fixé à la structure d'appui (6).

3. Appareil à raclette (1) selon la revendication 1 ou 2, **caractérisé en ce que** le capot (3) comprend une paroi latérale (14), le dispositif de verrouillage libérable (26) coopérant avec la paroi latérale (14) pour immobiliser le capot (3) à la structure d'appui (6).

4. Appareil à raclette (1) selon la revendication 3, **caractérisé en ce que** le capot (3) comprend une bordure (28) à son extrémité inférieure, le dispositif de verrouillage libérable (26) coopérant avec la bordure (28) pour immobiliser le capot (3) à la structure d'appui (6).

5. Appareil à raclette (1) selon l'une des revendications 1 à 4, **caractérisé en ce que** chaque lame élastiquement déformable comprend au moins une extrémité d'encliquetage (27) adaptée à venir emprisonner la bordure (28) du capot (3).

6. Appareil à raclette (1) selon la revendication 5, **caractérisé en ce que** chaque lame élastiquement déformable comprend deux extrémités d'encliquetage (27) opposées adaptées à venir emprisonner la bordure (28) du capot (3) en deux zones opposées l'une de l'autre.

7. Appareil à raclette (1) selon l'une des revendications 5 ou 6, **caractérisé en ce que** l'extrémité libre (29) de chaque extrémité d'encliquetage (27) forme une zone de manipulation permettant de déformer élastiquement l'extrémité d'encliquetage et de libérer le capot (3).

8. Appareil à raclette (1) selon l'une des revendications 5 à 7, **caractérisé en ce que** le dispositif de verrouillage libérable (26) comprend des moyens de guidage (30) adaptés à limiter les déformations de la résistance électrique (5).

9. Appareil à raclette (1) selon la revendication 8, **caractérisé en ce que** les moyens de guidage (30) sont formés par une patte enveloppant partiellement la résistance électrique (5).

## Patentansprüche

1. Raclette-Gerät (1), das einen Herdboden (4), der Garbehälter aufnehmen kann, einen elektrischen Widerstand (5), der so angeordnet ist, dass er sich oberhalb der Behälter befindet, wenn sie auf dem Herdboden (4) ruhen, eine Stützstruktur (6), die sich senkrecht über den elektrischen Widerstand (5) hinaus erstreckt, und einen entfernbaren Deckel (3) enthält, der geeignet ist, um auf der Stützstruktur (6) aufzuliegen und den elektrischen Widerstand (5) zu umhüllen, um den Zugriff darauf für einen Benutzer zu verhindern, **dadurch gekennzeichnet, dass** das Raclette-Gerät (1) eine lösbare Verriegelungsvorrichtung (26) enthält, die es ermöglicht, den Deckel (3) an der Stützstruktur (6) zu fixieren, und die von einer elastisch verformbaren Lamelle geformt wird, die geeignet ist, um den Deckel (3) so durch Einrasten zu fixieren.

2. Raclette-Gerät (1) nach Anspruch 1, **dadurch gekennzeichnet, dass** die lösbare Verriegelungsvorrichtung (26) an der Stützstruktur (6) befestigt ist.

3. Raclette-Gerät (1) nach Anspruch 1 oder 2, **dadurch gekennzeichnet, dass** der Deckel (3) eine Seitenwand (14) enthält, wobei die lösbare Verriegelungsvorrichtung (26) mit der Seitenwand (14) zusammenwirkt, um den Deckel (3) an der Stützstruktur (6) zu fixieren.

4. Raclette-Gerät (1) nach Anspruch 3, **dadurch gekennzeichnet, dass** der Deckel (3) eine Randleiste (28) an seinem unteren Ende aufweist, wobei die lösbare Verriegelungsvorrichtung (26) mit der Randleiste (28) zusammenwirkt, um den Deckel (3) an der Stützstruktur (6) zu fixieren.

5. Raclette-Gerät (1) nach einem der Ansprüche 1 bis 4, **dadurch gekennzeichnet, dass** jede elastisch verformbare Lamelle mindestens ein Einrastende (27) enthält, das geeignet ist, um die Randleiste (28) des Deckels (3) einzuklemmen.

6. Raclette-Gerät (1) nach Anspruch 5, **dadurch gekennzeichnet, dass** jede elastisch verformbare Lamelle zwei gegenüberliegende Einrastenden (27) enthält, die geeignet sind, um die Randleiste (28) des Deckels (3) in zwei einander gegenüberliegenden Zonen einzuklemmen.

7. Raclette-Gerät (1) nach einem der Ansprüche 5 oder 6, **dadurch gekennzeichnet, dass** das freie Ende (29) jedes Einrastendes (27) eine Handhabungszone bildet, die es ermöglicht, das Einrastende elastisch zu verformen und den Deckel (3) freizusetzen.

8. Raclette-Gerät (1) nach einem der Ansprüche 5 bis 7, **dadurch gekennzeichnet, dass** die lösbare Verriegelungsvorrichtung (26) Führungseinrichtungen (30) enthält, die geeignet sind, um die Verformungen des elektrischen Widerstands (5) zu begrenzen.

9. Raclette-Gerät (1) nach Anspruch 8, **dadurch gekennzeichnet, dass** die Führungseinrichtungen (30) von einer Lasche gebildet werden, die den elektrischen Widerstand (5) zumindest teilweise umhüllt.

## Claims

1. Raclette device (1) comprising a soleplate (4) adapted to receive cooking vessels, an electrical resistance (5) situated so as to be above the vessels when they rest on the soleplate (4), a supporting structure (6) which extends vertically beyond the electrical resistance (5), and a removable hood (3) adapted to rest on the supporting structure (6) and to envelop the electrical resistance (5) so as to prevent access to a user, **characterized in that** the raclette device (1) comprises a releasable locking device (26) for immobilizing the hood (3) on the supporting structure (6) and which is formed by an elastically deformable blade adapted to thus immobilize the hood (3) by snap-fastening.

2. Raclette device (1) according to Claim 1, **characterized in that** the releasable locking device (26) is fixed to the supporting structure (6).

3. Raclette device (1) according to Claim 1 or 2, **characterized in that** the hood (3) comprises a lateral wall (14), the releasable locking device (26) cooperating with the lateral wall (14) in order to immobilize the hood (3) on the supporting structure (6).

4. Raclette device (1) according to Claim 3, **characterized in that** the hood (3) comprises a border (28) at its lower end, the releasable locking device (26) cooperating with the border (28) in order to immobilize the hood (3) on the supporting structure (6).

5. Raclette device (1) according to one of Claims 1 to 4, **characterized in that** each elastically deformable blade comprises at least one snap-fastening end (27) adapted to entrap the border (28) of the hood (3).

6. Raclette device (1) according to Claim 5, **characterized in that** each elastically deformable blade comprises two opposed snap-fastening ends (27) adapted to entrap the border (28) of the hood (3) in two opposed zones each other.

7. Raclette device (1) according to one of Claims 5 and 6, **characterized in that** the free end (29) of each snap-fastening end (27) forms a handling zone which makes it possible to elastically deform the snap-fastening end and to release the hood (3).

8. Raclette device (1) according to one of Claims 5 to 7, **characterized in that** the releasable locking device (26) comprises guiding means (30) adapted to limit the deformations of the electrical resistance (5).

9. Raclette device (1) according to Claim 8, **characterized in that** the guiding means (30) are formed by a leg partially enveloping the electrical resistance (5).
